# FASCICULE DE BREVET EUROPEEN

(11) **EP 0 632 916 B1**
(45) Date de publication et mention de la délivrance du brevet: **15.11.1995**
(21) Numéro de dépôt: 93921733.7
(22) Date de dépôt: 23.03.1993
(51) Int. Cl.: G06T 17/00, G09G 3/00

(54) **REPARTITEUR TRIDIMENSIONNEL D'ENERGIE**
DREIDIMENSIONALER ENERGIEVERTEILER.
THREE-DIMENSIONAL ENERGY DISTRIBUTOR

(30) Priorité: 27.03.1992 FR 9204132
(43) Date de publication de la demande: 11.01.1995
(73) Titulaire: UNIVERSITE JOSEPH FOURIER, F-38041 Grenoble Cédex (FR)
(72) Inventeur: CINQUIN, Philippe, F-38000 Grenoble (FR); DESBAT, Laurent, F-38000 Grenoble (FR)
(74) Mandataire: de Beaumont, Michel
(86) Numéro de dépôt international: FR9300286
(87) Numéro de publication internationale: WO9320528

(56) Documents cités:
- EP-A- 0 322 257
- US-A- 4 881 068
- IBM TECHNICAL DISCLOSURE BULLETIN vol. 10, no. 5, 5 Octobre 1967, POLE 'computer generated 3D displays'
- 72IEEE INTERCON 20 Mars 1972, NEW YORK, N.Y., USA pages 11118-119 VERBER ET AL. 'three-dimensional disaplys based upon the sequential excitation of fluorescence.'

## Description

La présente invention concerne un répartiteur tridimensionnel d'énergie selon le préambule de la revendication 1, permettant, par exemple, de constituer une image tridimensionnelle à partir d'une énergie lumineuse. Un tel dispositif est connu par le document 72IEEE. INTERCON, 20 Mars 1972, New York, pages 118-119.

Il est fréquent, par exemple dans le domaine médical, de souhaiter visualiser des objets qui ne sont pas directement visibles, tels que des organes. Les méthodes classiques, telles que la radiographie, l'échographie... permettent d'avoir des vues planes des organes et une idée sommaire de leur aspect. Des techniques plus sophistiquées permettent de reconstituer des coupes détaillées du corps humain et des images de synthèse des organes à partir de plusieurs coupes.

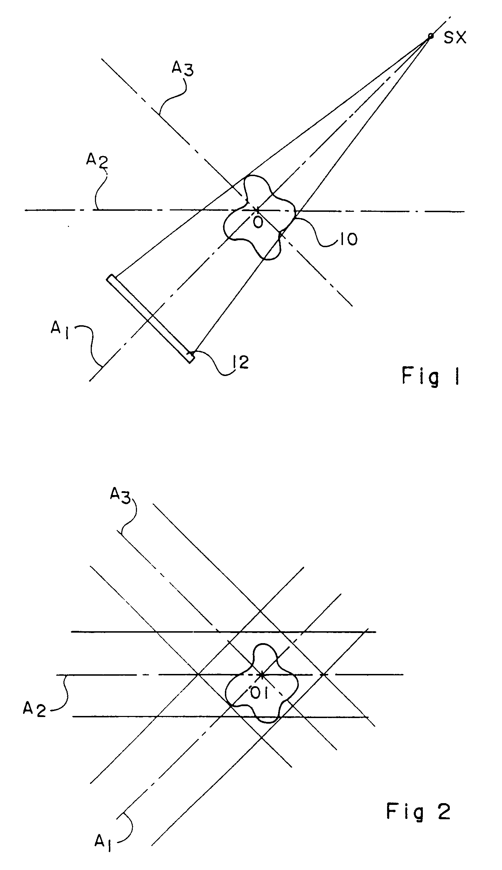

Les figures 1 et 2 illustrent deux étapes d'un exemple de technique classique d'obtention d'images de synthèse d'un objet. Ces figures sont très schématiques et les divers éléments y sont représentés à des échelles arbitraires.

La figure 1 correspond à une étape d'obtention d'un ensemble de projections linéaires de densité radiologique d'un objet 10 dans le but d'obtenir une coupe de l'objet selon un plan. L'objet 10 est examiné selon des axes A₁, A₂, A₃... d'angles différents, situés dans le plan de coupe souhaité, et passant par un point O de l'objet 10. Selon chaque axe, on recueille sur un capteur 12 un profil représentant approximativement la projection de densité de l'objet 10 selon l'axe A concerné. Le capteur 12 comprend des éléments sensibles à une excitation spécifique à la technique d'examen, par exemple à des rayons X dans un scanner-X. Dans l'exemple d'un scanner-X, une source SX émet à travers l'objet 10 vers le capteur un faisceau de rayons X en éventail à rayons parallèles au plan de coupe. La source SX est disposée loin du capteur pour obtenir, dans le plan de coupe, des rayons approximativement parallèles. Chaque profil capté selon un axe respectif A est ensuite mémorisé dans un système informatique et corrigé pour tenir compte du non-parallélisme des rayons. Ainsi, on obtient en mémoire un ensemble de profils corrigés correspondant à des projections de densité radiologique de l'objet.

La figure 2 illustre symboliquement comment on reconstitue à partir des projections de densité une vue en coupe de l'objet 10. La méthode de reconstitution de la figure 2 est une reconstitution mathématique couramment appelée "reconstitution par épandage des projections filtrées".

Chaque projection est d'abord traitée par un filtre de déconvolution, par exemple un filtre dit de "Shep et Logan", destiné à atténuer les effets de bord ou les distorsions générés par la méthode de reconstitution de la coupe. A chaque projection traitée est associée une famille de droites parallèles coplanaires. Chaque droite de la famille passe par un point de la projection traitée et est affectée d'un coefficient représentant la densité du point.

Chacune des familles est ensuite orientée vers un point Oi selon un axe correspondant à l'axe A respectif d'examen. Chaque point dans la surface d'intersection des familles est affecté de la somme des coefficients de densité des droites qui passent par ce point. Dans cette surface, on obtient un nuage de points correspondant à une coupe de l'objet examiné 10, la densité calculée pour chaque point de ce nuage représentant sensiblement la densité du point correspondant de l'objet. La définition de l'objet fournie par ce nuage est d'autant meilleure que le nombre d'axes d'examen A distincts est grand.

En traitant adéquatement ce nuage de points, on peut afficher sur un écran la coupe de l'objet et faire ressortir des zones différentes par des couleurs ou des niveaux de gris. Les zones que l'on veut faire ressortir correspondent, par exemple, à des organes. On peut localiser un organe dans la coupe grâce à diverses caractéristiques présentées par les points correspondant à l'organe, tels qu'une densité différente, une texture différente.

Pour réaliser une image de synthèse de l'objet en entier ou d'une partie de l'objet, on constitue d'abord plusieurs coupes consécutives de l'objet selon ce qui précède. Les coupes sont ensuite superposées et on interpole les points manquants pour constituer la surface extérieure de la partie désirée. On peut alors simuler un éclairage de cette surface extérieure pour obtenir un rendu réaliste de ses formes.

Un objet de la présente invention est de répartir dans l'espace une énergie tridimensionnelle correspondant à une image n'existant jusqu'à maintenant que sous forme calculée.

Cet objet est atteint grâce à un dispositif de répartition tridimensionnelle d'énergie comprenant : un volume réagissant à l'énergie d'un rayonnement prédéterminé ; une pluralité de sources dudit rayonnement éclairant ledit volume selon des angles respectifs ; et, interposé entre chaque source et le volume, un support transparent audit rayonnement et comprenant une image correspondant à une projection de densité d'un objet réel ou virtuel examiné selon l'angle respectif d'éclairage du volume par ladite source, cette projection ayant subi un traitement de correction d'image.

Selon un mode de réalisation de la présente invention, le traitement de correction d'image est destiné à corriger des distorsions liées aux conditions d'éclairage du volume et, le cas échéant, d'examen de l'objet.

Selon un mode de réalisation de la présente invention, des moyens sont prévus pour rendre les rayons issus de chaque source parallèles entre eux lorsqu'ils pénètrent dans ledit volume, et le traitement de correction est un filtrage de Shep et Logan.

Selon un mode de réalisation de la présente invention, ledit volume est compris dans une sphère transparente audit rayonnement et dont le diamètre est choisi pour que lesdits rayons deviennent parallèles entre eux lorsqu'ils pénètrent dans la sphère.

Selon un mode de réalisation de la présente invention, ledit volume est transparent et comprend un produit fluorescent audit rayonnement.

Selon un mode de réalisation de la présente invention, ledit volume est en une résine qui polymérise localement en fonction de l'énergie de rayonnement.

Selon un mode de réalisation de la présente invention, lesdits supports sont des diapositives.

Selon un mode de réalisation de la présente invention, lesdits supports sont des écrans à cristaux liquides.

Selon un mode de réalisation de la présente invention, lesdites sources sont réalisées à partir de fibres optiques reliées à une source unique.

Selon un mode de réalisation de la présente invention, lesdites sources sont réalisées à partir d'un faisceau laser conique éclairant des miroirs qui renvoient des parties de ce faisceau conique vers lesdits supports.

Ces objets, caractéristiques et avantages ainsi que d'autres de la présente invention seront exposés en détail dans la description suivante de modes de réalisation particuliers faite en relation avec les figures jointes parmi lesquelles :
les figures 1 et 2, précédemment décrites, représentent un procédé classique d'obtention d'une image sous forme calculée d'un objet ;
la figure 3 représente très schématiquement un dispositif selon l'invention pour répartir dans l'espace une énergie tridimensionnelle ; et
la figure 4 représente un mode de réalisation d'éléments du dispositif de la figure 3, permettant une réalisation pratique de ce dispositif.

Les figures sont très schématiques et les éléments y sont représentés à des échelles arbitraires.

La présente invention est décrite ci-après à l'aide d'un exemple de mode de réalisation permettant de constituer tridimensionnellement une image.

Initialement, on crée un objet virtuel dans la mémoire d'un système informatique. Cet objet peut être entièrement calculé ou avoir été obtenu en examinant initialement un objet réel, comme dans la figure 1, selon différents axes A. En effectuant un examen mathématique de cet objet virtuel selon différents axes A, on en déduit une projection surfacique de densité par axe. Si l'objet virtuel correspond à un objet réel, chaque projection surfacique est l'ensemble des projections linéaires préalablement obtenues classiquement en examinant l'objet selon un axe A associé.

L'objet virtuel peut être traité, avant examen mathématique, de différentes manières selon l'image que l'on veut en constituer. Par exemple, pour simuler un éclairage de l'objet selon un certain angle, on ne considère que la surface extérieure de l'objet, chaque point de cette surface étant affecté d'une densité proportionnelle à l'intensité d'éclairage de ce point et les points n'appartenant pas à la surface étant affectés d'une densité nulle.

Chaque projection surfacique est ensuite traitée par un filtre de déconvolution adéquat (de Shep et Logan). A partir de chaque projection surfacique traitée, on réalise une diapositive de manière classique, par exemple à l'aide d'un reprographe. On obtient donc un jeu de diapositives D1, D2, D3... dont chacune représente par des niveaux de gris une projection surfacique traitée de densité.

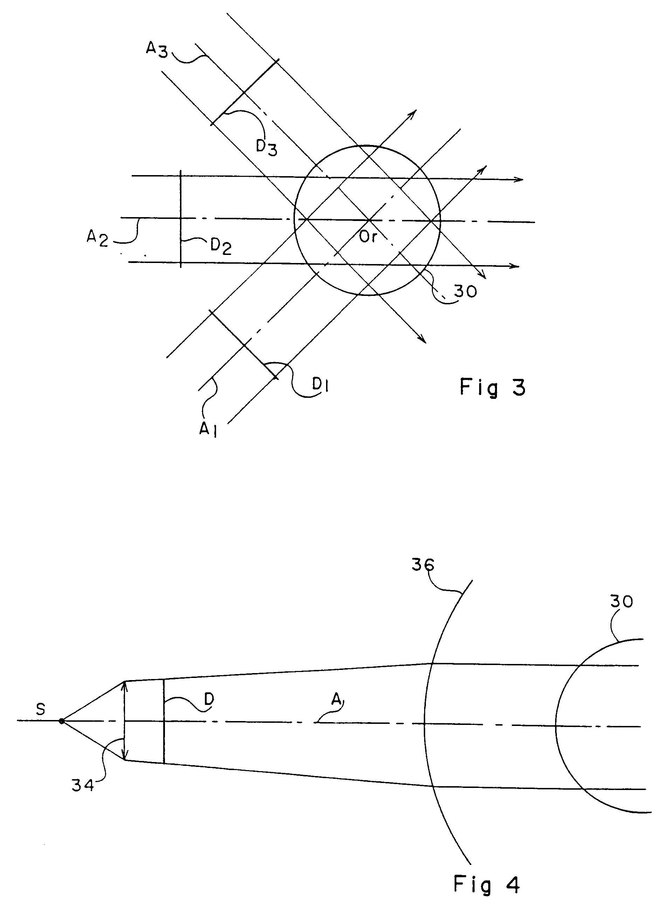

La figure 3 représente très schématiquement comment exploiter les diapositives D pour constituer une image tridimensionnelle. Des faisceaux de rayons parallèles éclairent un volume 30 selon les axes A₁, A₂, A₃... d'examen de l'objet virtuel dont on veut constituer l'image. Chaque diapositive D est interposée dans un faisceau d'axe A correspondant et est positionnée dans un plan perpendiculaire à son axe A de manière à correspondre aux conditions d'examen de l'objet.

Le volume 30 est réalisé en un matériau tranparent au rayonnement des faisceaux et réagissant à l'énergie du rayonnement. Dans le cadre d'une constitution d'image dans le volume 30, ce volume contient un produit fluorescent, par exemple de la rhodamine 6G. Les faisceaux sont alors adaptés pour émettre une longueur d'onde adéquate (environ 540 nm pour la rhodamine 6G), par exemple en filtrant de la lumière blanche.

Ainsi, chaque point du volume 30 réémet une quantité de lumière en fonction de l'énergie lumineuse amenée par les rayons se croisant en ce point. Il se forme dans ce volume 30 une image tridimensionnelle constituée de zones plus ou moins lumineuses déterminées par les niveaux de gris des diapositives D.

La définition de l'image tridimensionnelle est d'autant meilleure que le nombre d'axes d'examen, et de diapositives correspondantes, est grand. Pour un nombre N d'axes, on peut définir indépendemment la luminosité d'environ N² points distincts dans chaque plan parallèle au plan des axes. En pratique, 64 axes fournissent une définition minimale.

Pour réaliser des images tridimensionnelles en couleur, on peut prévoir trois groupes de diapositives, chaque groupe étant d'une couleur différente ou éclairé par une source de couleur différente. Le volume 30 contient alors trois produits fluorescents correspondants.

Généralement, le volume 30 est d'indice différent de celui du milieu où sont disposées les diapositives D et les rayons pénétrant dans ce volume ne restent donc pas parallèles.

La figure 4 représente un mode de réalisation pratique permettant de s'affranchir de cet inconvénient. Chaque diapositive D est éclairée par un faisceau en forme de cône d'angle au sommet connu. Ce faisceau conique provient par exemple d'une lentille convergente 34 éclairée par une source S. Le volume 30 est disposé à l'intérieur d'une sphère 36 transparente et de même indice que le volume 30. Le diamètre de la sphère 36 est choisi pour que les rayons incidents du faisceau deviennent parallèles entre eux en pénétrant dans la sphère. Pour visualiser l'image tridimensionnelle dans le volume 30, ce volume est de préférence un cylindre d'axe perpendiculaire au plan des diapositives afin que l'on puisse observer l'image sans distorsion à travers des faces planes extrêmes du cylindre.

Pour positionner correctement les diapositives, on peut imprimer sur celles-ci, en même temps que les niveaux de gris, des repères dans une zone non utilisée des diapositives. Au positionnement de chaque diapositive, la diapositive est éclairée et on fait correspondre les repères avec une cible plane disposée, à la place du volume 30, perpendiculairement à l'axe A de la diapositive.

En remplaçant les diapositives D par des écrans à cristaux liquides sur lesquels on affiche des images animées en niveaux de gris, on pourra visualiser dans le volume 30 des images tridimensionnelles animées. On peut également réaliser un téléviseur à écran parfaitement plat. Pour cela le volume 30 est réalisé sous forme de disque et les diapositives sont remplacées par des barrettes de cristaux liquides disposées dans le plan du disque. La face arrière du disque 30 peut être recouverte d'une couche réfléchissante pour améliorer le rendu de l'image.

Le volume 30 peut contenir une résine transparente liquide qui polymérise plus ou moins rapidement en fonction de l'énergie de rayonnement qu'elle reçoit. On peut ainsi faire polymériser préférentiellement les zones recevant le plus d'énergie pour reconstituer un modèle de l'objet virtuel. Une telle résine est par exemple un monomère transparent aux rayons ultra-violets (acrylate) mélangé à une faible quantité d'un amorceur qui absorbe les rayons ultra-violets de 350 à 360 nm. En pratique, une telle résine accumule l'énergie qu'elle reçoit. On peut donc ne prévoir qu'une source lumineuse pour éclairer le volume 30, ce volume étant périodiquement tourné d'un angle adéquat en changeant la diapositive.

Dans le cadre de la reconstitution d'un modèle d'un objet, on peut également envisager de réaliser le volume 30 en un matériau dont les propriétés de résistance à un produit de gravure changent sous l'effet d'une énergie de rayonnement. Le modèle est alors extrait en soumettant le volume au produit de gravure.

Le volume 30 peut être réalisé en un matériau dont les propriétés optiques, par exemple la transparence, changent de manière durable sous l'effet d'une énérgie de rayonnement. On peut ainsi obtenir une "photographie" tridimensionnelle de l'objet. En remplaçant les diapositives par des écrans à cristaux liquides, on peut stocker des informations dans le volume 30 en affichant des densités préalablement calculées sur les écrans. Les informations stockées sont alors sous la forme d'une "photographie" tridimensionnelle et elles peuvent être relues en effectuant un examen du volume 30 de la manière décrite pour les figures 1 et 2 sous un rayonnement adéquat. Dans le cadre d'un stockage d'informations binaires, l'examen du volume fournit un nuage calculé de points dont chaque point est affecté, selon la valeur logique d'un bit correspondant, d'une densité forte ou bien d'une densité faible.

Le volume 30 peut être réalisé en un matériau dont les propriétés conductrices changent sous l'effet d'une énergie de rayonnement. Ainsi, on peut réaliser des voies conductrices dans le volume 30 en réalisant des diapositives adéquates. Ces voies connecteront entre eux des circuits électroniques intégrés dans le volume 30.

Les rayons pénétrant dans le volume 30 ont été considérés couine parallèles. Ceci permet d'obtenir les images en traitant les projections surfaciques de densité par un procédé classique (filtre de Shep et Logan). Toutefois, les rayons pénétrant dans le volume 30 peuvent être non-parallèles à condition de préalablement traiter les projections par un traitement mathématique adéquat permettant de corriger les effets de bord ou les distorsions provoqués par une reconstitution d'image à partir de rayons non-parallèles.

De nombreuses variantes et modifications de la présente invention apparaîtront à l'homme de l'art, notamment en ce qui concerne la réalisation des sources éclairant chaque diapositive. Par exemple, la lumière peut être amenée vers les lentilles 34 par l'intermédiaire de fibres optiques reliées à une même source. On peut éclairer le plan des diapositives par un faisceau laser rendu conique par un objectif et renvoyer des portions de ce faisceau conique vers les lentilles 34 par l'intermédiaire de miroirs. On peut tout simplement prévoir une source lumineuse filtrée indépendante par diapositive.

## Revendications

1. Dispositif de répartition tridimensionnelle d'énergie, comprenant.
- un volume (30) réagissant à l'énergie d'un rayonnement prédéterminé ;
et caractérisé en ce qu'il comprend:
- une pluralité de sources dudit rayonnement éclairant ledit volume selon des angles respectifs (A₁, A₂, A₃...) ; et
- interposé entre chaque source et le volume, un support (D₁, D₂, D₃...) transparent audit rayonnement et comprenant une image correspondant à une projection de densité d'un objet réel ou virtuel examiné selon l'angle respectif d'éclairage du volume par ladite source, cette projection ayant subi un traitement de correction d'image.

2. Dispositif de répartition selon la revendication 1, caractérisé en ce que le traitement de correction d'image est destiné à corriger des distorsions liées aux conditions d'éclairage du volume (30) et, le cas échéant, d'examen de l'objet.

3. Dispositif de répartition selon la revendication 1, caractérisé en ce que des moyens sont prévus pour rendre les rayons issus de chaque source parallèles entre eux lorsqu'ils pénètrent dans ledit volume (30), et en ce que le traitement de correction est un filtrage de Shep et Logan.

4. Dispositif de répartition selon la revendication 3, caractérisé en ce que ledit volume (30) est compris dans une sphère (36) transparente audit rayonnement et dont le diamètre est choisi pour que lesdits rayons deviennent parallèles entre eux lorsqu'ils pénètrent dans la sphère.

5. Dispositif de répartition selon la revendication 1, caractérisé en ce que ledit volume (30) est transparent et comprend un produit fluorescent audit rayonnement.

6. Dispositif de répartition selon la revendication 1, caractérisé en ce que ledit volume (30) est en une résine qui polymérise localement en fonction de l'énergie de rayonnement.

7. Dispositif de répartition selon la revendication 1, caractérisé en ce que lesdits supports sont des diapositives.

8. Dispositif de répartition selon la revendication 1, caractérisé en ce que lesdits supports sont des écrans à cristaux liquides.

9. Dispositif de répartition selon la revendication 1, caractérisé en ce que lesdites sources sont réalisées à partir de fibres optiques reliées à une source unique.

10. Dispositif de répartition selon la revendication 1, caractérisé en ce que lesdites sources sont réalisées à partir d'un faisceau laser conique éclairant des miroirs qui renvoient des parties de ce faisceau conique vers lesdits supports.

## Patentansprüche

1. Dreidimensionale Energieverteilungseinrichtung mit einem Volumen (30), das auf die Energie einer vorbestimmten Strahlung reagiert; und
dadurch **gekennzeichnet**, daß sie folgendes aufweist:
- eine Vielzahl von Quellen der Strahlung, die das Volumen gemäß jeweiligen Winkeln (A₁, A₂, A₃ ...) beleuchtet bzw. bestrahlt; und
- wobei zwischen jeder Quelle und dem Volumen eine Tragvorrichtung bzw. ein Support (D₁, D₂, D₃ ..) plaziert ist, die bzw. der durchlässig für die Strahlung ist und die ein Bild aufweist, entsprechend einer Dichteprojektion eines realen oder virtuellen Objekts, das bei dem Winkel der jeweiligen Quelle das Volumen beleuchtet bzw. bestrahlt, wobei die Pojektion einem Bildkorrekturprozeß ausgesetzt wurde.

2. Dreidimensionale Energieverteilungseinrichtung nach Anspruch 1, dadurch gekennzeichnet, daß man beabsichtigt, daß der Bildkorrekturprozeß Distorsionen bzw. Verzerrungen auf Grund der Beleuchtungs- bzw. Bestrahlungsbedingungen des Volumens (30) und/oder auf Grund Untersuchungs- bzw. Prüfbedingungen des Objekts korrigiert.

3. Dreidimensionale Energieverteilungseinrichtung nach Anspruch 1, dadurch gekennzeichnet, daß Mittel vorgesehen sind, um die Strahlen jeder Quelle parallel zueinander zu machen, wenn sie in das Volumen (30) eindringen und wobei der Korrekturprozeß ein Shep- und Loganfiltern ist.

4. Dreidimensionale Energieverteilungseinrichtung nach Anspruch 3, dadurch gekennzeichnet, daß das Volumen (30) innerhalb einet Kugel(oberfläche) (36) eingeschlossen ist, die für die Strahlung transparent bzw. durchlässig ist und deren Durchmesser so ausgewählt ist, daß die Strahlen parallel zueinander werden, wenn sie in die Kugel bzw. Kugeloberfläche eintreten.

5. Dreidimensionale Energieverteilungseinrichtung nach Anspruch 1, dadurch gekennzeichnet, daß das Volumen (30) transparent bzw. durchlässig ist und ein Produkt umfaßt, das fluoreszent für die Strahlung ist.

6. Dreidimensionale Energieverteilungseinrichtung nach Anspruch 1, dadurch gekennzeichnet, daß das Volumen (30) ein Harz ist, der lokal als eine Funktion der Strahlungsenergie polymerisiert.

7. Dreidimensionale Energieverteilungseinrichtung nach Anspruch 1. ddurch gekennzeichnet, daß die Tragvorrichtung ein Dia ist.

8. Dreidimensionale Energieverteilungseinrichtung nach Anspruch 1, dadurch gekennzeichnet, daß die Tragvorrichtung ein Flüssigkristallschirm ist.

9. Dreidimensionale Energieverteilungseinrichtung nach Anspruch, dadurch gekennzeichnet, daß die Quellen optische Fasern bzw. Fibern sind, die mit einer einzelnen Quelle verbunden sind.

10. Dreidimensionale Energieverteilungseinrichtung nach Anspruch 1, dadurch gekennzeichnet, daß die Quellen aus einem konischen Laserstrahl realisiert werden, der die Spiegel bestrahlt bzw. beleuchtet, die einen Teil des konischen Strahls zu den Tragvorrichtungen reflektieren.

## Claims

1. A three-dimensional energy distribution device including a volume (30) reacting to the energy of a predetermined radiation; and characterized in that it comprises:
- a plurality of sources of said radiation illuminating said volume according to respective angles (A₁, A₂, A₃...); and,
- placed between each source and the volume, a support (D₁, D₂, D₃...) that is transparent to said radiation and that includes an image corresponding to a density projection of a real or virtual object examined at the angle the respective source illuminates the volume, said projection having been subjected to an image correction process.

2. The three-dimensional energy distribution device of claim 1, characterized in that the image correction process is intended to correct distortions due to illumination conditions of the volume (30) and/or to examination conditions of the object.

3. The three-dimensional energy distribution device of claim 1, characterized in that means are provided to render the rays of each source parallel to each other when they penetrate into said volume (30), and wherein the correction process is a Shep and Logan filtering.

4. The three-dimensional energy distribution device of claim 3, characterized in that said volume (30) is included within a sphere (36) transparent to said radiation and whose diameter is selected so that said rays become parallel to each other when they penetrate into the sphere.

5. The three-dimensional energy distribution device of claim 1, characterized in that said volume (30) is transparent and includes a product that is fluorescent to said radiation.

6. The three-dimensional energy distribution device of claim 1, characterized in that said volume (30) is a resin that locally polymerizes as a function of the radiation energy.

7. The three-dimensional energy distribution device of claim 1, characterized in that said support is a slide.

8. The three-dimensional energy distribution device of claim 1, characterized in that said support is a liquid crystal screen.

9. The three-dimensional energy distribution device of claim 1, characterized in that said sources are optical fibers connected to a single source.

10. The three-dimensional energy distribution device of claim 1, characterized in that said sources are realized from a conical laser beam illuminating mirrors that reflect a portion of said conical beam to the supports.
